# EUROPEAN PATENT SPECIFICATION

(11) **EP 1 493 501 B1**
(45) Date of publication and mention of the grant of the patent: **05.08.2009**
(21) Application number: 04253475.0
(22) Date of filing: 10.06.2004
(51) Int. Cl.: B07C 5/342, E05D 7/12, G01N 21/90

(54) **Container inspection machine with easy access to its optical and electronical components for maintenance**
Maschine zur Kontrolle von Behältern mit einfachem Zugang zu ihren optischen und elektronischen Bauelementen für Wartungszwecke
Machine d'inspection de conteneur avec l'accès facile à ses composants optiques et électroniques pour l'entretien

(30) Priority: 30.06.2003 US 610060
(43) Date of publication of application: 05.01.2005
(73) Proprietor: Emhart Glass S.A., 6330 Cham (CH)
(72) Inventor: Raupp, Henry F., Freeville, New York 13068 (US)
(74) Representative: Warren, Anthony Robert

(56) References cited:
- EP-A- 0 810 702
- US-A- 2 051 946
- US-A- 3 434 594
- US-A- 3 545 134
- US-A- 3 886 356
- US-A- 5 714 998
- US-B1- 6 226 081
- GLASS, MONTHLY JOURNAL OF THE EUROPEAN GLASS INDUSTRY, DMG WORLD MEDIA, 20 June 2003 (2003-06-20), page 150, XP002301548 REDHILL, SURREY, UK

## Description

The present invention relates to machines which inspect containers such as bottles for defects and more particularly to such machines wherein a bottle is conveyed through one or more inspection stations via a linear conveyor system.

Machines for inspecting glass bottles and the like are performing more and more inspections using camera technology. In such applications mirrors redirect images to a camera and massive light sources assure proper illumination. Access to this equipment is a high priority in the design of the machine, since the environment within a factory making glass bottles is not clean, requiring periodic cleaning of the light sources, mirrors and camera lenses.

The present invention relates to a machine for inspecting a container which is being conveyed along a linear path, generally of the type shown in Glass Monthly Journal of the European Glass Industry, DMG World Media, 20 June 2003 (2003-06-20), page 150, Redhill, Surrey, UK, the machine comprising a conveyor providing the linear path, first and second cabinet means in front of the conveyor and at or towards opposite ends of the linear path, an open area in front of the conveyor and defined, in the direction of the linear path, between adjacent sides of the first and second cabinet means, first and second doors, first hinge means hinging the first door at said side of the first cabinet means and second hinge means hinging the second door at said side of the second cabinet means for swinging movement of the doors between a closed position in which they cooperate to close off the front of, and obstruct entry into, the open area, and an open position to provide access to the open area.

US-A-3,886,356 and US-B-6,226,081 both show a container inspection machine in which the conveyor travels between a single housing in front of the conveyor and a single housing behind the conveyor. The front housing contains the machine electrical and optical systems which can be accessed via a side door. The rear housing contains a light source from which light passes, through the conveyed containers being inspected, to the optical system in the front housing.

It is an object of the present invention to provide a machine for inspecting glass containers which will make required cleaning of the mirror's, etc. easier.

According to the present invention, there is provided a machine for inspecting containers as defined in the characterizing clause of claim 1.

The present invention will now be described with reference to the accompanying drawings which illustrate a presently preferred embodiment incorporating the principles of the invention, and in which:
Figure 1 is a schematic oblique view of an inspection machine for inspecting bottles made in accordance with the teachings of the present invention;
Figure 2 is an oblique view of a portion of the machine with the top cover raised and the center doors pushed open;
Figure 3 is an oblique view of a door hinge shown in Figure 2;
Figure 4 is a view similar to that of Figure 2 with all the doors and panels removed;
Figure 5 is a top view of the machine, in the operating mode, with the top cover removed to reveal additional features of the machine; and
Figure 6 is a top view similar to Figure 6, but with the machine in the servicing mode.

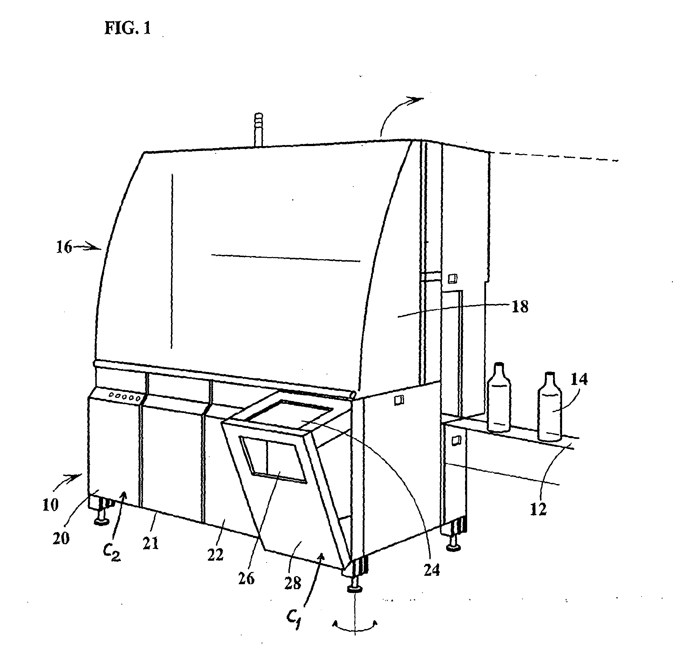

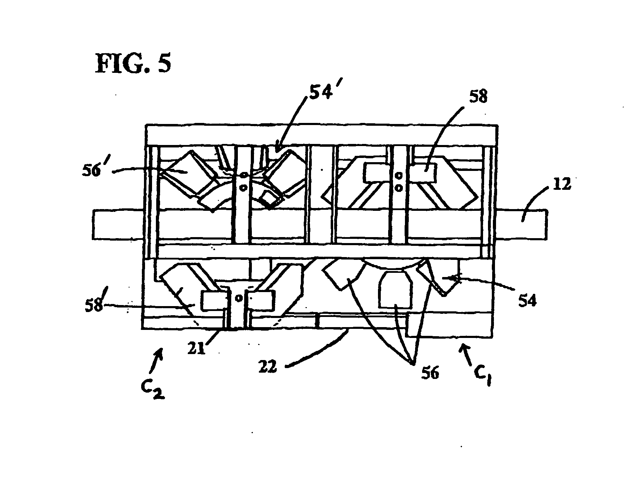

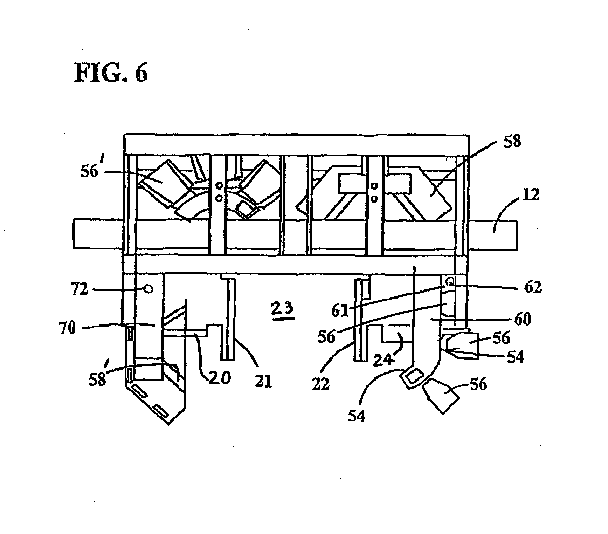

Figure 1 shows a glass container, for example bottle inspection machine 10 which has a conveyor 12 for conveying bottles 14 through the machine. As the bottles proceed through the machine they will pass through any number of inspection stations. A plastic front closure 16 is pivotally mounted across the top so that it can be raised to provide access to the inspection stations of the machine as described later with reference to Figures 5 and 6. This front closure 16 cooperates with two fixed side panels 18 to close the machine.

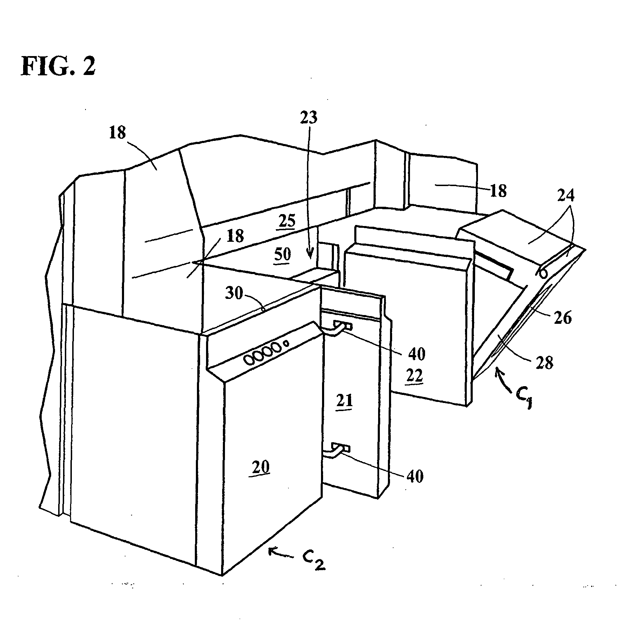

Below the closure are three front panels 20,21,22. The left most panel 20, which is the front panel of the first or left hand cabinet C₂, can be released via a screw 30 (Figure 2) and removed from the frame to provide frontal access to the electronics stored within.

Also below the closure is a second or right hand cabinet C₁ containing a console 24 that can be used by an operator to operate the machine. When not in use the console can be pushed down against the front wall of the cabinet and will be covered by the window 26 in the front wall cover 28 which pivots to a vertical position (see US-A-6,371,580). This structure is secured to the frame via a vertical pivot (not shown) at the right side so that it can pivot outwardly providing frontal access to the electronics stored within.

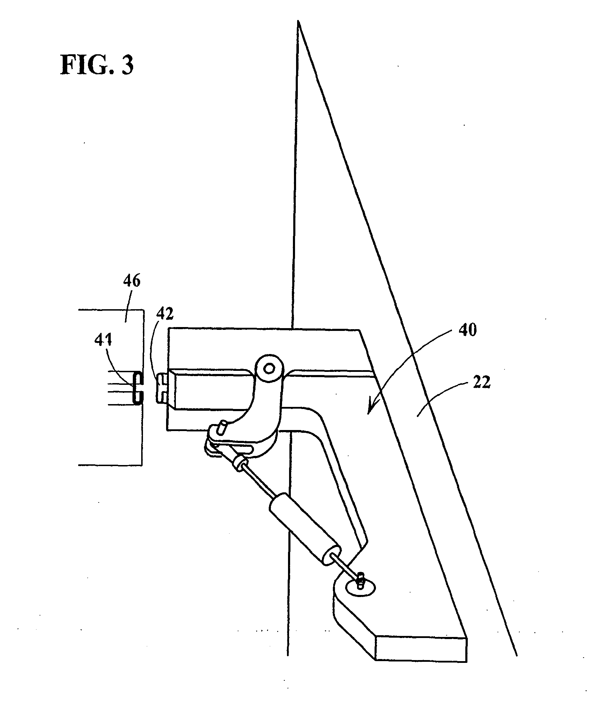

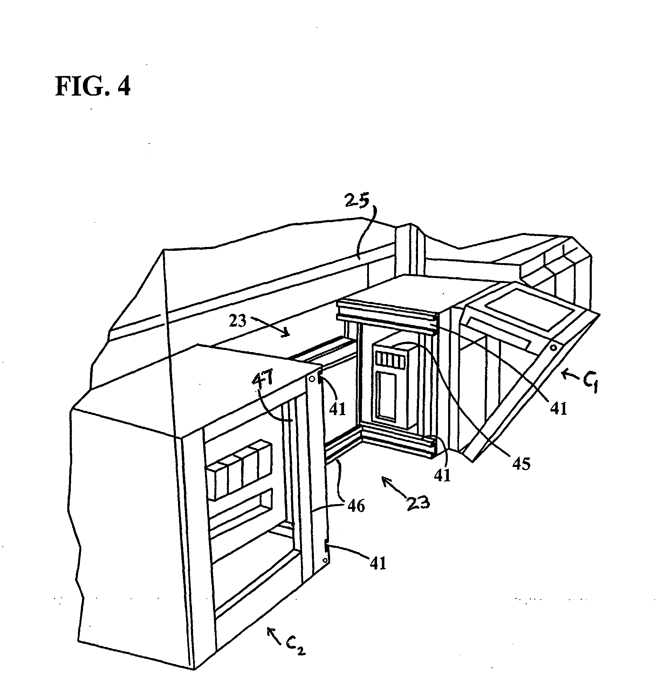

Figure 2 shows that the pair of center panels 21,22 are doors which open inwardly into an open area or chamber 23 into which an operator can enter for working in close proximity with the conveyor path 25. As shown, each door has upper and lower hinges 40, each secured to an elongated key member 42 (Figure 3) which -slides into an elongated horizontal keyway 41 which is part of the machine framework 46. As can be seen from Figure 4, since the keyway extends to the front of the machine, each door can be completely removed from the machine by pulling the key 42 out of the keyway 41. With the doors removed the side opening 45 in the right hand cabinet C₁ and the side opening 47 in the left hand cabinet C₂ will be exposed thereby providing access from the side to the cabinets.

Finally, also exposed when the doors are opened is a panel 50 (Figure 2) covering the storage area beneath the conveyor path 25. This panel operates like the front left panel to provide access to the electronics stored behind this panel.

As shown in the plan views of Figures 5 and 6 (in which the front closure and top cover have been removed for clarity), the bottles pass through first, right hand, and second, left hand, inspection stations. The right hand station is defined by a right hand mirror assembly 54 which supports three mirrors 56 and is mounted in front of the conveyor path 25, a light source assembly 58 in the form of a large array of L.E.D.'s which is rigidly mounted behind the conveyor path on the machine frame 46, and a camera system (not shown) also mounted on the machine frame. The left hand station is defined by a mirror assembly 54' which supports three mirrors 56' and which is rigidly mounted behind the conveyor path 25 on the machine frame, a light source assembly 58' in the form of a large array of L.E.D.'s which is mounted in front of the conveyor path, and a camera system (not shown) also mounted on the machine frame.

As can be seen from Figure 6, the right hand mirror assembly 54 is mounted on a horizontal arm 60 which is secured at its end proximate the conveyor path, to a vertical column 61 which is mounted on a pivot shaft 62 located at the right end of the machine. The right hand mirror assembly can therefore be pivotally displaced forwardly and rearwardly over the right hand cabinet containing the console 24, between a retracted service position shown in Figure 6 and the operating position shown in Figure 5. The left end light source assembly 58' is mounted on a horizontal arm 70 which is secured at the interior end to a pivot shaft 72 located at the left end of the machine. The left hand light source assembly can therefore be pivotally displaced forwardly and rearwardly over the left hand cabinet having the front panel 20, between a retracted service position shown in Figure 6 and the operating position shown in Figure 5 where it (like the retracted right hand mirror assembly 54) will be clear of the open area or chamber 23, so that a serviceman can service the conveyor path and the equipment at the first and second inspection stations.

When the machine is in the servicing mode with the left-hand light source assembly and the right hand mirror assembly at their service positions and the front doors 21,22 open, an operator can step into the chamber 23 and conveniently address any issues involving bottles being conveyed along the conveyor, or service/clean all of the mirror and light source assemblies, camera lenses, etc.

## Claims

1. A machine (10) for inspecting a container (14) which is being conveyed along a linear path through the machine, comprising
a conveyor (12) providing the linear path,
first (C₂) and second (C₁) cabinet means in front of the conveyor and at or towards opposite ends of the linear path,
an open area (23) in front of the conveyor and defined, in the direction of the linear path, between adjacent sides (47, 45) of the first and second cabinet means,
first (21) and second (22) doors,
first hinge means (40) hinging said first door (21) at said side (47) of the first cabinet means (C₂) and second hinge means (40) hinging said second door (22) at said side (45) of the second cabinet means (C₁), for swinging movement of said doors between a closed position in which they cooperate to close off the front of, and obstruct entry into, the open area (23), and an open position to provide access to said open area,
**characterised in that**
said adjacent sides (47, 45) of the first and second cabinet means (C₂, C₁) are open,
said first and second hinge means (40) hinge the first and second doors (21, 22) so that they can be pushed from their closed position to an open position against their associated open sides (47, 45),
first and second mounting means (41, 42) are provided, secured to the respective first and second hinge means and adapted to removably and replaceably mount the respective first and second doors (21, 22) on their associated open sides (47, 45) to allow said doors to be replaceably removed from their cabinet means to provide access to said open sides, and to the interior of said first and second cabinet means through the open sides.

2. A machine according to claim 1, wherein each said mounting means comprises an elongated horizontal keyway (41) which extends to the front of the machine and which is part of the machine frame (46), and an elongated key member (42) which is part of the associated hinge means (40) and is slidably mounted in the keyway (41).

## Patentansprüche

1. Maschine (10) zur Inspektion eines Behälters (14), der auf einem linearen Pfad durch die Maschine transportiert wird, mit:
einem Fördermittel (12), das den linearen Pfad bereitstellt,
ersten (C₂) und zweiten (C₁) Schrankmitteln vor dem Fördermittel an oder in gegenüberliegenden Richtungen des linearen Pfades,
einem offenen Bereich (23) vor dem Fördermittel, der in Richtung des linearen Pfades zwischen benachbarten Seiten (47,45) der ersten und zweiten Schrankmittel definiert ist,
ersten (21) und zweiten (22) Türen,
ersten Scharniermitteln (40), die die erste Tür (21) an der Seite (47) des ersten Schrankmittels (C₂) aufhängen, und zweiten Scharniermitteln (40), die die zweite Tür (22) an der Seite (45) des zweiten Schrankmittels (C₁) aufhängt, um eine schwingende Bewegung der Türen zwischen einer geschlossen Position, in der sie kooperieren um die Frontseite zu verschließen und den Zugang in den offenen Bereich (23) zu versperren, und einer offenen Position auszuführen, um Zugang zu dem offenen Bereich zu ermöglichen,
**dadurch gekennzeichnet, dass**
die benachbarten Seiten (47, 45) der ersten und zweiten Schrankmittel (C₁, C₂) offen sind,
wobei die ersten und zweiten Scharniermittel (40) die ersten und zweiten Türen (21, 22) so aufhängen, dass sie von ihrer geschlossenen Position in eine offene Position gegen ihre zugehörigen offenen Seiten (47, 45) gedrückt werden können,
wobei erste und zweite Befestigungsmittel (41, 42) vorgesehen sind, die an den entsprechenden ersten und zweiten Scharniermitteln gesichert und geeignet sind, die jeweiligen ersten und zweiten Türen (21, 22) entfernbar und austauschbar an ihren zugehörigen offenen Seiten (47, 45) zu befestigen, um den Türen zu gestatten, austauschbar von ihren Schrankmitteln entfernt zu werden, um den Zugang zu den offenen Seiten und dem Innenraum der ersten und zweiten Schrankmittel durch die offenen Seiten bereitzustellen.

2. Maschine nach Anspruch 1, bei der jedes der Befestigungsmittel eine verlängerte horizontale Keilnut (41), die sich zur Frontseite der Maschine erstreckt und dem Maschinenrahmen (46) zugehörig ist, und ein verlängertes Keilelement (42) umfasst, das den zugehörigen Scharniermitteln (40) zugeordnet ist und verschiebbar in der Keilnut (41) befestigt ist.

## Revendications

1. Machine (10) pour inspecter un conteneur (14) qui est acheminé le long d'un trajet linéaire à travers la machine, comportant
un convoyeur (12) créant le trajet linéaire,
des premiers (C₂) et seconds (C₁) moyens formant enceinte devant le convoyeur et au niveau ou vers des extrémités opposées du trajet linéaire,
une zone ouverte (23) devant le convoyeur et définie, dans la direction du trajet linéaire, entre des côtés adjacents (47, 45) des premiers et seconds moyens formant enceinte,
des première (21) et seconde (22) portes,
des premiers moyens formant charnière (40) faisant pivoter ladite première porte (21) au niveau dudit côté (47) des premiers moyens formant enceinte (C₂) et des seconds moyens formant charnière (40) faisant pivoter ladite seconde porte (22) au niveau dudit côté (45) des seconds moyens formant enceinte (C₁), pour un mouvement oscillant desdites portes entre une position fermée dans laquelle elles coopèrent pour bloquer l'avant de la zone ouverte (23) et barrer l'entrée dans celle-ci, et une position ouverte donnant accès à ladite zone ouverte,
**caractérisée en ce que**
lesdits côtés adjacents (47, 45) des premiers et seconds moyens formant enceinte (C₂, C₁) sont ouverts,
lesdits premiers et seconds moyens formant charnière (40) font pivoter les première et seconde portes (21, 22) de telle sorte qu'elles peuvent être poussées de leur position fermée à une position ouverte contre leurs côtés ouverts associés (47, 45),
des premiers et seconds moyens de montage (41, 42) sont agencés, fixés sur les premiers et seconds moyens formant charnière respectifs et adaptés pour monter de manière amovible et remplaçable les première et seconde portes (21, 22) respectives sur leurs côtés ouverts associés (47, 45) pour permettre un retrait desdites portes de leurs moyens formant enceinte, de manière à pouvoir remplacer celles-ci, afin de donner accès auxdits côtés ouverts et à l'intérieur desdits premiers et seconds moyens formant enceinte par les côtés ouverts.

2. Machine selon la revendication 1, dans laquelle chacun desdits moyens de montage comporte une rainure de clavette horizontale allongée (41) qui s'étend jusqu'à l'avant de la machine et qui est une partie du bâti de machine (46), et un élément de clavette allongé (42) qui est une partie des moyens formant charnière (40) associés et qui est monté de manière coulissante dans la rainure de clavette (41).
